# EUROPÄISCHE PATENTSCHRIFT

(11) **EP 4 264 109 B1**
(45) Veröffentlichungstag und Bekanntmachung des Hinweises auf die Patenterteilung: **29.01.2025**
(21) Anmeldenummer: 21801469.4
(22) Anmeldetag: 26.10.2021
(51) Int. Cl.: F16L 55/165, E03F 3/06, F16L 11/04

(54) **AUSKLEIDUNGSSCHLAUCH ZUR SANIERUNG VON DEFEKTEN KANALROHREN UND VERFAHREN ZUR HERSTELLUNG SOWIE INSTALLATION EINES SOLCHEN**
LINING TUBE FOR RECONDITIONING OF DEFECTIVE SEWER PIPES AND METHOD OF PRODUCING AND INSTALLING ONE
TUBE DE DOUBLAGE POUR LE RECONDITIONNEMENT DE TUYAUX D'ÉGOUT DÉFECTUEUX ET PROCÉDÉ DE PRODUCTION ET D'INSTALLATION D'UN TUBE DE DOUBLAGE

(30) Priorität: 18.12.2020 DE 102020134200
(43) Veröffentlichungstag der Anmeldung: 25.10.2023
(73) Patentinhaber: Brandenburger Liner GmbH & Co. KG, 76829 Landau (DE)
(72) Erfinder: BLENKE, Stefan, 76829 Landau (DE)
(74) Vertreter: Kesselhut, Wolf
(86) Internationale Anmeldenummer: PCT/EP2021/079673
(87) Internationale Veröffentlichungsnummer: WO 2022/128218

(56) Entgegenhaltungen:
- EP-A1- 0 787 940
- WO-A1-2012/159702
- US-A1- 2006 151 042
- US-A1- 2016 305 579
- US-A1- 2018 003 331

## Beschreibung

Die Erfindung betrifft einen Auskleidungsschlauch zur Sanierung von defekten Kanalrohren und ein Verfahren zur Herstellung sowie zur Installation eines solchen gemäß Anspruch 1, 8, 10 und 11.

Auf dem Gebiet der grabenlosen Sanierung von defekten Rohrleitungen, wie z.B. defekten Abwasserkanälen, werden zunehmend Auskleidungsschläuche eingesetzt, die eine oder mehrere Lagen aus einem mit einem flüssigem Reaktionsharz getränkten Glasfaserlaminat aufweisen, welches in Form von überlappend gewickelten oder gelegten Faserbändern um einen Innenfolienschlauch herum angeordnet ist. Auf der Außenseite ist das Laminat von einem Außenfolienschlauch umgeben, der einen Austritt von schädlichen Substanzen, insbesondere von Styrol, aus dem Reaktionsharz in das Erdreich verhindert. Die Auskleidungsschläuche, die auch als Inliner bezeichnet werden, werden in einen zu sanierenden Kanal eingezogen, nach dem Einziehen an ihren Enden mit Hilfe von Packern verschlossen und mittels Druckluft expandiert und durch Licht einer UV-Strahlungsquelle, oder alternativ durch Einleiten von Heißdampf, ausgehärtet.

Ein zuvor genannter Auskleidungsschlauch sowie ein Verfahren zur Herstellung eines solchen sind beispielsweise aus der WO-A 95/04646 bekannt.

Weiterhin beschreibt die WO-A 2012/159702 einen Auskleidungsschlauch zur Sanierung von Kanälen, der eine in Umfangsrichtung dehnbare, mit einem durch UV-Licht härtbaren Reaktionsharz getränkte Verstärkungslage sowie einen die Verstärkungslage umgebenden Außenfolienschlauch besitzt, um den herum ein für UV-Licht undurchlässiger Schutzschlauch aus einem reißfesten Werkstoff, wie dem Material einer LKW-Plane, angeordnet ist. Um den Auskleidungsschlauch nach dem Einziehen in einen Kanal radial expandieren zu können, so dass sich dieser vor dem Aushärten mittels einer hindurchgeführten UV-Lichtquelle an die Innenseite der Kanalwand anleget, weist der Schutzschlauch einen sich in dessen Längsrichtung erstreckenden Verbindungsabschnitt auf, der durch Einleiten von Druckluft in den Auskleidungsschlauch in Umfangsrichtung dehnbar ist. Obgleich das Dokument die grundsätzliche Möglichkeit beschreibt, dass der Auskleidungsschlauch nicht nur durch Einziehen, sondern auch durch Invertieren in den zu sanierenden Kanal eingebracht werden kann, gibt das Dokument keinen Hinweis darauf, den Schutzschlauch aus einem für UV-Licht transparenten Material zu fertigen, durch das hindurch das Reaktionsharz mit Hilfe der UV-Lichtquelle ausgehärtet werden kann.

Um beim Expandieren der Auskleidungsschläuche eine bestmögliche Anlage derselben an die Kanalinnenwände zu erhalten, welche die Grundvoraussetzung für eine hohe maximale mechanische Belastbarkeit darstellt, werden diese üblicherweise mit einem Außendurchmesser gefertigt, der 5 bis 10 % kleiner als der Innendurchmesser DN des zu sanierenden Kanalrohrs ist. Dieses geringfügige Untermaß führt aufgrund der zusätzlichen Dehnung des Auskleidungsschlauchs beim Expandieren zu einer verbesserten Oberflächengüte des ausgehärteten Laminats und erlaubt es, geringfügige Durchmesseränderungen eines Kanalrohrs auszugleichen. Eine Dehnbarkeit von mehr als 10 % ist bei den bekannten Auskleidungsschläuchen des Standes der Technik, wie beispielsweise denen der WO-A 95/04646, hingegen nicht möglich, da sich hierdurch die Gefahr ergibt, dass die empfindliche transparente Innenfolie überdehnt und beschädigt wird, sodass die beim Expandieren eingeleitete Druckluft durch die beschädigte Innenfolie hindurch in das Laminat austritt und das flüssige Reaktionsharz an der entsprechenden Stelle ausbläst. Dies führt nach dem Aushärten des Reaktionsharzes in der Regel zu einer mechanischen Schwachstelle und Undichtigkeit, die, wenn überhaupt, nur mit großem Aufwand ermittelt und beseitigt werden kann.

Auf der anderen Seite ist es jedoch in der Praxis ebenfalls nicht möglich, die zuvor beschriebenen Auskleidungsschläuche mit einem Durchmesser zu fertigen, der größer als der Innendurchmesser des zu sanierenden Kanalrohres ist, da das Laminat und der Außenfolienschlauch in diesem Falle Falten schlagen, die im sanierten Kanal unerwünscht sind und die bei der Aushärtung mittels UV-Licht zu einer Schattenbildung führen, welche bei größeren Wanddicken eine vollständige Durchhärtung des Reaktionsharzes verhindert.

Aus den zuvor genannten Gründen werden bei der Sanierung von Rohrleitungen mit einem Durchmesser DN zwischen 150 mm und 1000 mm mehr als 40 verschiedene Grund-Typen von Auskleidungsschläuchen mit einem jeweiligen Nenndurchmesser DN und einem jeweils speziell gefertigten Innenfolienschlauch benötigt, um für jeden Kanaldurchmesser einen optimal angepassten Auskleidungsschlauch bereitzustellen, der nach dem Einziehen, Expandieren und Aushärten eine maximale mechanische Festigkeit und Dichtheit garantiert. Es versteht sich, dass das Vorhalten einer entsprechenden Anzahl von in der Regel nahtlosen Innenfolienschläuchen, sowie die auf diesem aufbauende individuelle Fertigung des Laminats mit einem entsprechenden Durchmesser einen großen logistischen Aufwand darstellt, der die Produktion der Auskleidungsschläuche teuer macht.

Eine weitere Unzulänglichkeit der bekannten Auskleidungsschläuche ist darin zu sehen, dass Kanalrohre, bei denen sich der Innendurchmesser in einer sogenannten Haltung beispielsweise von DN 300 auf DN 400 sprunghaft ändert, mit den zuvor beschriebenen bekannten Auskleidungsschläuchen nur mit großen Unsicherheiten, bzw. mit großem Aufwand durch Einziehen und Verbinden zweier separater Auskleidungsschläuche mit einem entsprechenden Durchmesser auskleiden lassen.

Demgemäß ist es eine Aufgabe der vorliegenden Erfindung, einen Auskleidungsschlauch zu schaffen, welcher es ermöglicht, Kanalrohre mit jeweils unterschiedlichen Innendurchmessern oder mit sich über die Länge des Kanalrohres hinweg änderndem Innendurchmesser mit ein und demselben Auskleidungsschlauch zu sanieren.

Diese Aufgabe wird erfindungsgemäß durch einen Auskleidungsschlauch mit den Merkmalen von Anspruch 1 gelöst.

Eine weitere Aufgabe der Erfindung ist es, ein Verfahren zu schaffen, mit welchem sich ein solcher Auskleidungsschlauch fertigen lässt.

Diese Aufgabe wird erfindungsgemäß durch ein Verfahren mit den Merkmalen von Anspruch 8 gelöst.

Eine abermals weitere Aufgabe der Erfindung ist es, ein Verfahren zu schaffen, mit dem ein solcher Auskleidungsschlauch in einem defekten Kanalrohr installiert werden kann.

Diese Aufgabe wird erfindungsgemäß durch ein Verfahren mit den Merkmalen von Anspruch 10 und 11 gelöst.

Weitere Merkmale der Erfindung sind in den Unteransprüchen beschrieben.

Nach dem der Erfindung zugrunde liegenden Gedanken ist ein im Querschnitt kreisförmiger, zylindrischer Auskleidungsschlauch so ausgestaltet, dass er sich beim Expandieren an die unterschiedlichen Durchmesser eines Kanalrohres anpassen kann. Dies ermöglicht es, den Auskleidungsschlauch, wie in der WO-A 95/04646 beschrieben, als endlosen Schlauch zu fertigen und auf die Baustelle zu transportieren.

Der Auskleidungsschlauch umfasst hierzu einen für UV-Licht transparenten Innenfolienschlauch, auf welchem wenigstens eine Lage eines schraubenförmig gewickelten oder alternativ auch umfänglich gelegten Faserbandes, insbesondere eines Glasfaserbandes oder Glasfaservlieses angeordnet ist, welches mit einem flüssigen Reaktionsharz getränkt ist, das durch UV-Licht ausgehärtet werden kann. Darauf folgt bevorzugt ein in Längsrichtung orientiertes Glasfaserband (Längszugband), welches die Zugkräfte beim Einbau des nachfolgend auch als "Liner" bezeichneten Auskleidungsschlauchs in das Kanalrohr abträgt.

Um die durch das harzgetränkte Faserband geformte, umfänglich geschlossene Schicht herum ist bevorzugt ein Außenfolienschlauch angeordnet, der eine der Lage aus Fasermaterial zugewandte Vlieslage aufweisen kann, die auf eine zur Bildung des Außenfolienschlauchs verwendete Kunststofffolie aufkaschiert ist. Um den Außenfolienschlauch herum, der bevorzugt aus einer Mehrlagenfolie mit einer Styrolbarriere gefertigt ist, insbesondere eine PE-PA-PE Folie, auf deren innenliegende PE-Lage die Vliesschicht durch einen Schmelzvorgang aufkaschiert ist, ist bevorzugt eine reißfeste, bevorzugt gewebeverstärkte Schutzfolie angeordnet, die einen Aufbau und Materialeigenschaften wie eine LKW-Plane oder eine reißfeste Verpackungsfolie besitzt, und deren Längsränder über die Länge des Auskleidungsschlauchs hinweg z.B. durch Klebeband oder einen aufgeschweißten oder aufgeklebten elastischen Folienabschnitt verbunden sind. Dieser elastische Folienabschnitt, der auch durch einen Streifen Klebeband mit einer entsprechenden Breite gebildet werden kann, wird beim Expandieren des Auskleidungsschlauchs nach Art einer Sollbruchstelle aufgetrennt und erlaubt dadurch eine radiale Dehnung des ansonsten reißfesten und nahezu nicht dehnbaren äußeren Schutzschlauchs auf den jeweiligen Innendurchmesser des Kanalrohres. Die Sollbruchstelle kann aber auch in anderer Form, z.B. als Perforation, in den überlappend aus einer, zwei oder mehr Folienbahnen durch randseitiges Verkleben, bzw. Verschweißen gebildeten Schutzschlauch, der nachfolgend auch als weiterer Außenfolienschlauch bezeichnet wird, eingebracht werden.

Der Auskleidungsschlauch zeichnet sich dadurch aus, dass der Innenfolienschlauch einen sich in Längsrichtung desselben erstreckenden Verbindungsabschnitt besitzt, welcher zwei parallel zueinander verlaufende Umfangsabschnitte des Innenfolienschlauchs zu einem umfänglich geschlossenen Innenfolienschlauch mit einem definierten Nenndurchmesser DN verbindet, der kleiner, insbesondere wenigsten 10% kleiner als der Innendurchmesser der zu sanierenden Kanalrohres ist. Bei Kanalrohren, die Rohrabschnitte mit unterschiedlichen Durchmessern besitzen, entspricht der Nenndurchmesser bevorzugt dem Durchmesser des ersten kleineren Rohrabschnitts. Der Verbindungsabschnitt umfasst erfindungsgemäß eine sich entlang des Innenfolienschlauchs erstreckende Sollbruchstelle, die durch Einbringen eines Druckmediums, insbesondere Druckluft, in Umfangsrichtung auftrennbar ist, so dass sich der Innenfolienschlauch und die darauf angeordnete Lage aus Fasermaterial radial über den Nenndurchmesser des ungeöffneten Innenfolienschlauchs hinaus, um mehr als 10 %, bevorzugt mehr als 30 % bis auf den Durchmesser des Kanalrohres aufweiten kann. Hierdurch ergibt sich der Vorteil, dass der umfänglich geschlossene Innenfolienschlauch mit der ungeöffneten Sollbruchstelle bei der Herstellung des Auskleidungsschlauchs auf einer Wickelmaschine als Basisschlauch dienen kann, um den die Faserbänder herumgewickelt werden, und der einen wohl definierten Nenndurchmesser DN besitzt und die Wickelzunge oder den Wickeldorn der Wickelmaschine vor einem direkten Kontakt mit dem harzgetränkten Fasermaterial schützt.

Bei Kanalrohren, die einen ersten Rohrabschnitt mit einem kleineren Durchmesser und einen sich daran anschließenden zweiten Rohrabschnitt mit einem erweiterten Durchmesser aufweisen, entspricht der definierte Nenndurchmesser des ungeöffneten Innenfolienschlauchs im Wesentlichen dem Innendurchmesser des ersten Rohrabschnitts, und der Durchmesser des Innenfolienschlauchs mit geöffneter Sollbruchstelle dem Innendurchmesser des zweiten erweiterten Rohrabschnitts.

Dieser Innenfolienschlauch der eine große Laminatdehnung zulässt, ist damit die erste Schicht, um die die Lage aus Fasermaterial bei der bevorzugten Ausführungsform in bekannter Weise über einem inliegenden Wickeldorn endlos gewickelt wird. So wird der Auskleidungsschlauch herkömmlich gefertigt, verpackt und zur Baustelle geliefert.

Im Unterschied zu einem bekannten gewickelten Auskleidungsschlauch, der zur Sanierung von Kanälen und Rohrleitungen mit einem im Wesentlichen konstanten Durchmesser eingesetzt wird, zeichnet sich der erfindungsgemäße Auskleidungsschlauch gemäß einer bevorzugten Ausführungsform, dadurch aus, dass die schlauchförmig um den Innenfolienschlauch herum angeordnete Lage aus Fasermaterial aus einem überlappend gewickelten Faserband geformt ist, welches gegenüber Faserbändern, die bei herkömmlichen Auskleidungsschläuchen eingesetzt werden, eine deutlich höhere Längsdehnung erlaubt. Diese erhöhte Längsdehnung, die in Längsrichtung betrachtet wenigstens 10 %, bevorzugt jedoch mehr als 30% oder gar 50% bezogen auf die Länge des ungedehnten Faserbandes betragen kann, ermöglicht es, dass die Glasfaserbänder der gewickelten Faserlage sich in radialer Richtung stärker ausdehnen können, so dass die Lage aus Fasermaterial ihren Durchmesser in radialer Richtung auf den jeweiligen Durchmesser des zweiten Rohrabschnitts erweitern kann, um sich an die Innenwand des erweiterten Rohrabschnitts anzulegen.

Ein solches Glasfaserband mit hoher Längsdehnung herzustellen, ist im Stand der Technik bekannt. Beim Wickeln, bzw. Legen der harzgetränkten Faserbänder des erfindungsgemäßen Auskleidungsschlauchs wird dementsprechend berücksichtigt, dass sich aufgrund der hohen radialen Dehnung die Wanddicke des Laminats entsprechend verringert, so dass die Materialdicke der schraubenförmig übereinander gewickelten Faserbänder um ein entsprechendes Maß erhöht wird, um die Lage aus Fasermaterial mit einem entsprechenden Übermaß herzustellen, welches im fertigen Produkt nach dem Ausdehnen und Aushärten die geforderte Festigkeit gewährleistet.

Die hohe Dehnbarkeit des oder der in der Lage aus Fasermaterial eingesetzten Faserbänder ist zudem auch bei erfindungsgemäßen Auskleidungsschläuchen von Vorteil, bei denen die Lage aus Fasermaterial nicht gewickelt, sondern als Matte überlappend um den Innenfolienschlauch mit der daran geformten Sollbruchstelle herum gelegt wird.

Wie von der Anmelderin weiterhin erkannt wurde, muss sich beim Einsatz eines Außenfolienschlauchs auch dieser radial entsprechend mehr dehnen, als bei einem herkömmlichen Auskleidungsschlauch. Dies kann entweder durch generell dehnfähigere Folien oder eine Soll- Dehnfuge erreicht werden, wie sie beispielsweise in der deutschen Patentanmeldung (DE 10 2011 103 001 A1) beschrieben ist. Alternativ besteht die Möglichkeit, den Außenfolienschlauch, der nach dem Wickeln/Legen der Faserbänder und Aufbringen des Längszugbands aus zwei Flachfolien zu einem Schlauch verschweißt wird, generell etwas weiter, d.h. mit einem größeren Durchmesser zu schweißen, welcher den Durchmesser des ersten Rohrabschnitts mit kleinem Innendurchmesser überschreitet. Dazu kann z.B. die Flachfolie aus der dieser Schlauch thermisch geschweißt wird, so breit gewählt werden, dass deren Flachbreite in Summe dem Durchmesser des zweiten Rohrabschnitts mit vergrößertem Innendurchmesser entspricht. Damit dieser, mit einem zusätzlichen Übermaß von z.B. 50% geschweißte Außenfolienschlauch beim Transport zur Baustelle und beim Einziehen in ein Kanalrohr gut handhabbar ist, werden die Flachfolien bevorzugt längs gefaltet und mit Klebeband lösbar aneinander fixiert.

Um sicher zu stellen, dass die schlauchförmige Innenfolie des Innenfolienschlauchs, um die das Fasermaterial (Laminat) gewickelt oder gelegt wird, während des gesamten Expansionsvorgangs, bei welchem der Innenfolienschlauch und die darauf angeordnete Lage aus Fasermaterial mittels eingeleiteter Druckluft im Kanalrohr auf den Solldurchmesser gedehnt wird, sowie auch während der anschließenden Aushärtung mit UV-Licht luftdicht bleibt, wird im Innenraum des Innenfolienschlauchs bei einer vorteilhaften Ausführungsform der Erfindung ein weiterer (zweiter) Innenfolienschlauch angeordnet. Dieser kann z.B. bereits bei der Produktion des Auskleidungsschlauchs von vornherein mit in den ersten Innenfolienschlauch eingezogen werden, wenn dieser auf einem Wickeldorn, wie in der o.g. WO-A 95/04646 beschrieben, gefertigt wird.

Der Auskleidungsschlauch mit dem eingelegten oder eingezogenen weiteren (zweiten) luftdichten Innenfolienschlauch, dessen Durchmesser mindestens dem gegenüber dem definierten Nenndurchmesser um mehr als 10 % vergrößerten Innendurchmesser des Kanalrohres, bzw. des zweiten Rohrabschnitts entspricht, wird in bekannter Weise in ein zu sanierendes Kanalrohr eingezogen und an seinen Enden jeweils durch einen Packer verschlossen. Der durch die Packer verschlossene Auskleidungsschlauch wird anschließend durch Einleiten eines Druckgases, insbesondere von Druckluft, expandiert, wobei die Verklebung/Schweißnaht (Sollbruchstelle) des (ersten) Innenfolienschlauchs aufreißt, wenn der Druck weiter erhöht wird, so dass der (erste) Innenfolienschlauch fortan keinen Widerstand mehr gegen eine weitere Aufdehnung darstellt. Dies ermöglicht es, dass sich die Lage aus Fasermaterial, die einen Durchmesser besitzt, welcher im Wesentlichen dem Durchmesser des (ersten) ungeöffneten Innenfolienschlauchs, bzw. bei Kanalrohren mit zwei Rohrabschnitten dem Durchmesser des ersten kleineren Rohrabschnitts entspricht, radial weiter aufdehnen kann.

Da der Durchmesser des weiteren (zweiten) Innenfolienschlauchs gleich oder bevorzugt etwas größer als der Durchmesser des defekten Kanalrohres, bzw. des zweiten erweiterten Rohrabschnitts ist, erfährt der weitere (zweite) Innenfolienschlauch im Kanalrohr keine Dehnung, so dass sich dieser weitere (zweite) Innenfolienschlauch nach dem Aufplatzen der Sollbruchstelle des (ersten) Innenfolienschlauchs spannungsfrei an die Innenwand der Lage aus Fasermaterial anlegen kann. Hierdurch wird in vorteilhafter Weise sichergestellt, dass der weitere (zweite) Innenfolienschlauch insgesamt luftdicht bleibt und trotz der geöffneten Solbruchstelle im (ersten) Innenfolienschlauch keine Druckluft durch die Lage aus harzgetränktem Fasermaterial hindurch austreten kann, welche zu einem Ausblasen von Reaktionsharz führen würde.

Im Anschluss daran wird das durch UV-Licht härtbare flüssige Reaktionsharz in den Faserbändern mit Hilfe einer UV-Strahlungsquelle ausgehärtet, die ihr Licht durch den für UV-Licht transparenten weiteren (zweiten) Innenfolienschlauch sowie den an der Sollbruchstelle aufgeplatzten, ebenfalls für UV-Licht transparenten ersten Innenfolienschlauch hindurch auf die Lage aus Fasermaterial abstrahlt, während sie in bekannter Weise durch den Innenraum des weiteren (zweiten) Imienfolienschlauchs hindurch gezogen wird.

Wie von der Anmelderin gefunden wurde, beeinträchtigten die durch den weiteren Innenfolienschlauch im ersten Rohrabschnitt erzeugten Falten die vollständige Durchhärtung des Reaktionsharzes auch bei größeren Wandstärken von z.B. 15 mm nicht, da die Qualität der Innenfläche des sanierten Kanalrohres im ersten kleineren Rohrabschnitt durch die im Wesentlichen ebene Außenseite des in diesem Rohrabschnitt ungeöffneten Innenfolienschlauchs geformt wird. Bei den zuvor erwähnten Kanalrohren mit einem Durchmessersprung ist die Faltenbildung im zweiten erweiterten Rohrabschnitt ist ebenfalls vernachlässigbar, da dort der größte Teil der Innenfläche des Fasermaterials mit dem ebenen Material des (ersten) Innenfolienschlauchs belegt ist, und in dem Teil des Umfangs, in welchem der weitere (zweite) Innenfolienschlauch direkt am Laminat anliegt, nur noch wenige Falten und Verwerfungen des Folienmaterials des weiteren (zweiten) Innenfolienschlauchs aufgrund des erweiterten Durchmessers des zweiten Rohrabschnitts vorhanden sind.

Die Erfindung wird nachfolgend mit Bezug auf die Zeichnungen anhand von bevorzugten Ausführungsformen am Beispiel eines Kanalrohres mit zwei Durchmesserabschnitten beschrieben.

In den Zeichnungen zeigen:
- Fig. 1: eine schematische teiltransparente Aufsicht auf einen erfindungsgemäßen Auskleidungsschlauch,
- Fig. 2: eine schematische Darstellung einer bevorzugten Ausführungsform einer Wickelvorrichtung mit einem erfindungsgemäßen Auskleidungsschlauch, in dessen Innenfolienschlauch ein weiterer Innenfolienschlauch während des Wickelvorgangs eingezogen wird,
- Fig. 3: eine schematische Teildarstellung einer bevorzugten Ausführungsform eines in den erfindungsgemäßen Auskleidungsschläuchen eingesetzten Innenfolienschlauch mit Sollbruchstelle,
- Fig. 4: eine schematische Teildarstellung einer weiteren Ausführungsform eines in den erfindungsgemäßen Auskleidungsschläuchen eingesetzten nahtlosen Innenfolienschlauchs mit einer Sollbruchstelle, die eine Folienschlaufe umfasst, welche durch einen Folienstreifen überbrückt ist, und
- Fig. 5: eine schematische Darstellung eines defekten Kanalrohres mit einem ersten Rohrabschnitt mit kleinerem Durchmesser sowie einem zweiten Rohrabschnitt mit einem erweiterten Durchmesser, in die ein erfindungsgemäßer Auskleidungsschlauch mit einem weiteren (zweiten) expandierten Innenfolienschlauch eingezogen ist.

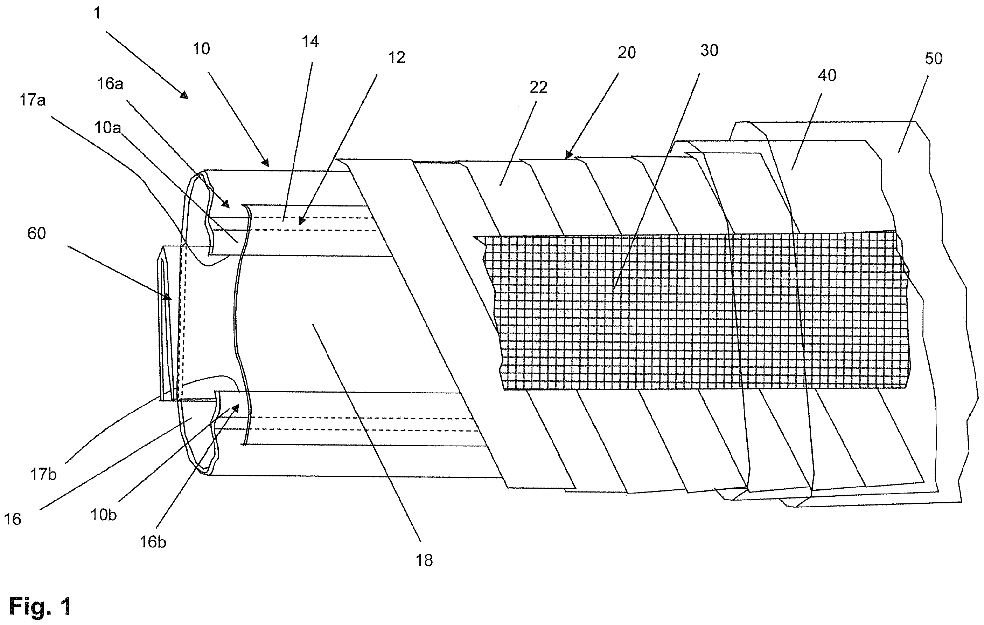

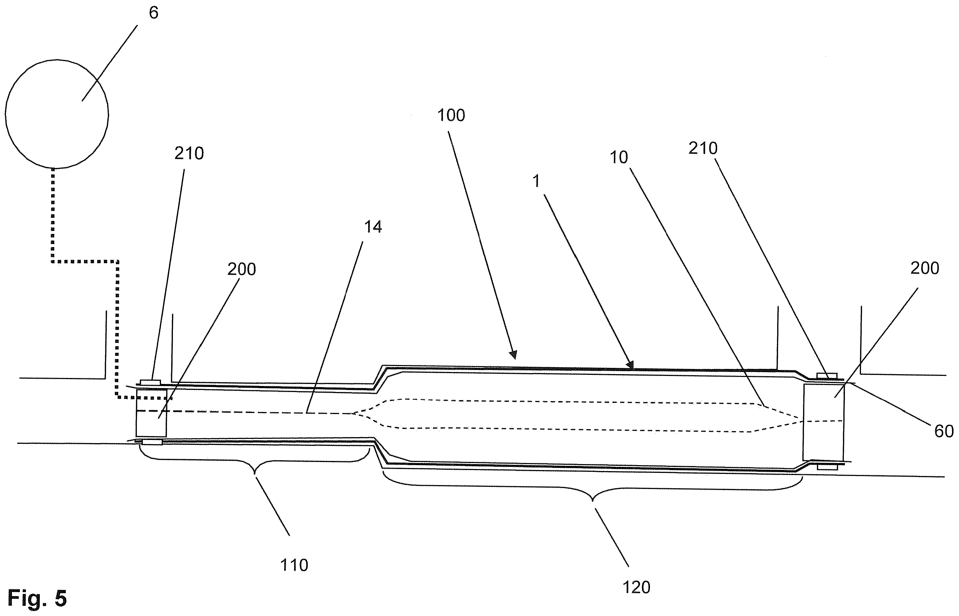

Wie in der Darstellung von Fig. 1 gezeigt ist, umfasst ein Auskleidungsschlauch 1 zur Sanierung eines in Fig. 5 dargestellten defekten Kanalrohres 100, das einen ersten Rohrabschnitt 110 mit einem ersten Durchmesser und einen sich daran anschließenden zweiten Rohrabschnitt 120 mit einem erweiterten Durchmesser aufweist, einen Innenfolienschlauch 10 sowie eine um diesen herum angeordnete, radial aufweitbare Lage aus Fasermaterial 20, welches mit einem härtbaren Reaktionsharz getränkt ist.

Der Auskleidungsschlauch 1 zeichnet sich dadurch aus, dass der Innenfolienschlauch 10 einen sich in Längsrichtung desselben erstreckenden Verbindungsabschnitt 12 besitzt, welcher, wie in Fig. 1 angedeutet, zwei parallel zueinander verlaufende Umfangsabschnitte 10a, 10b des Innenfolienschlauchs 10 zu einem umfänglich geschlossenen Innenfolienschlauch mit einem definierten Nenndurchmesser DN verbindet. Der Verbindungsabschnitt 12 umfasst eine sich entlang des Innenfolienschlauchs 10 erstreckende Sollbruchstelle 14, die durch Einbringen eines Druckmediums, insbesondere Druckluft, aus einer Druckgasquelle 6 (Fig. 5) in den Innenfolienschlauch 10 in Umfangsrichtung auftrennbar ist, so dass sich der Innenfolienschlauch 10 und die darauf angeordnete Lage aus Fasermaterial 20 radial über den Nenndurchmesser hinaus, der im Wesentlichen dem Durchmesser des ersten Rohrabschnitts 110 entspricht, um mehr als 10%, bevorzugt mehr als 30 % und besonders bevorzugt bis zu 50 % bis auf den erweiterten Durchmesser des zweiten Rohrabschnitt 120 aufweiten lässt.

So kann in der Praxis bei einem üblichen Kanalrohr 100 der Durchmesser des ersten Rohrabschnitts 110 beispielsweise 600 mm, und der Durchmesser des zweiten Rohrabschnitts 120 z.B. 800 mm betragen, wobei zwischen dem ersten und zweiten Rohrabschnitts 110, 120 ein Sprung oder auch ein konischer Übergangsabschnitt geformt sein können, in welchem sich der Durchmesser des Kanalrohres 100 wie in Fig. 5 gezeigt sprunghaft, oder aber kontinuierlich (nicht gezeigt) erweitert. Der Überdruck, bei welchem sich die Sollbruchstelle 14 öffnet, kann beispielweise bei 0,15 bar liegen und wird bevorzugt durch eine entsprechende Wahl des Klebstoffs, bzw. der Breite des Verbindungsabschnitts 12 so eingestellt, dass sich die Sollbruchstelle 14 im expandierten Auskleidungsschlauch 1 im zweiten Rohrabschnitt 120 bei den üblicher Weise verwendeten Luftdrücken stets zuverlässig öffnet.

Bei der bevorzugten Ausführungsform der Erfindung wird zur Bildung des Innenfolienschlauchs 10 wenigstens eine, z.B. durch Legen zu einem Schlauch geformte transparente Flachfolie 16 verwendet, deren Längsränder 17a, 17b, wie in Fig. 1 gezeigt, im Abstand zueinander verlaufen und durch einen auf die Außenseite aufgeklebten oder thermisch aufgeschweißten transparenten Folienstreifen 18 miteinander verbunden sind.

Die Sollbruchstelle 14 erstreckt sich bei dieser sehr kostengünstig zu fertigenden, in Fig. 1 gezeigten Ausführungsform entlang einem, bzw. beiden Längs-Schweißnähten, bzw. Klebestellen, entlang denen der transparente Folienstreifen 18 mit den entsprechenden Umfangsabschnitten 10a, 10b der ebenfalls transparenten Flachfolie 16 verbunden ist, aus welcher der Innenfolienschlauch 10 geformt wird.

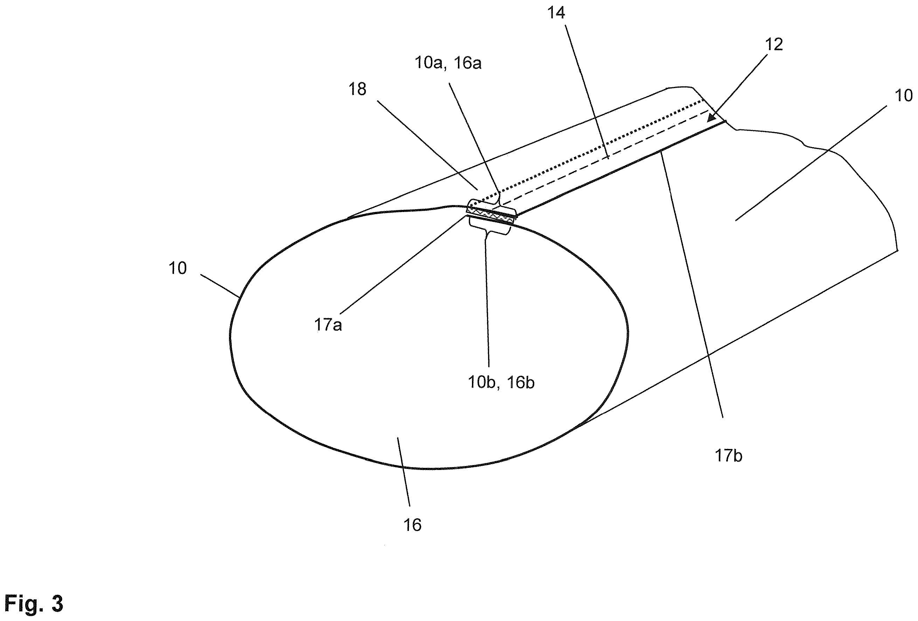

Bei einer weiteren, in Fig. 3 gezeigten Ausführungsform der Erfindung, die besonders kostengünstig und einfach zu fertigen ist, umfasst der Innenfolienschlauch 10 wenigstens eine zu einem Schlauch geformte Flachfolie 16, deren Randabschnitte 16a, 16b überlappend übereinander geführt und z.B. durch einen in Fig. 3 lediglich schematisch angedeuteten Klebstoff, z.B. ein doppelseitiges Klebeband, oder durch thermisches Verschweißen, miteinander verbunden sind. Alternativ können die Randabschnitte 16a und 16b auch durch ein transparentes Klebeband miteinander verbunden werden.

Die zuvor beschriebenen beiden Ausführungsformen des erfindungsgemäßen Innenfolienschlauchs bieten den Vorteil, dass in diesen hinein ein weiterer umfänglich geschlossener, bevorzugt nahtloser Innenfolienschlauch 60 eingelegt werden kann, wie dies in Fig. 1 angedeutet ist. Der weitere Innenfolienschlauch 60 wird insbesondere als kostengünstige ein- oder mehrfach in Längsrichtung gefaltete endlose Rollenware, z.B. als in Längsrichtung ein- oder mehrfach gefaltete nahtlose Folie aus Polyethylen, bereitgestellt, die in den Innenfolienschlauch 10 eingelegt wird, bevor die beiden Umfangsabschnitte 10a, 10b miteinander verklebt, bzw. verschweißt werden. Bei dieser Ausführungsform werden die harzgetränkten Faserbänder 22 der Lage aus Fasermaterial 20, in besonders vorteilhafter Weise um den verklebten/verschweißten Innenfolienschlauch 10 überlappend herum gelegt. Die Faserbänder sind in diesem Falle als einzelne Matten ausgebildet, die eine Länge besitzen, welche der Länge des zu fertigenden Auskleidungsschlauchs 1 entspricht. Die Breite der Matten ist bei dieser Ausführungsform geringfügig, z.B. 10 %, größer als der Innenumfang des zweiten vergrößerten Rohrabschnitts 120, wodurch sicher gestellt wird, dass die Lage aus Fasermaterial sich durch umfängliches Verschieben der überlappend geführten Längsränder der Matte auf den zweiten größeren Durchmesser aufweiten kann, dabei jedoch stets umfänglich vollständig geschlossen bleibt, wenn sich die Lage aus Fasermaterial 20 an den zweiten Rohrabschnitt 120 mit größerem Durchmesser angelegt hat.

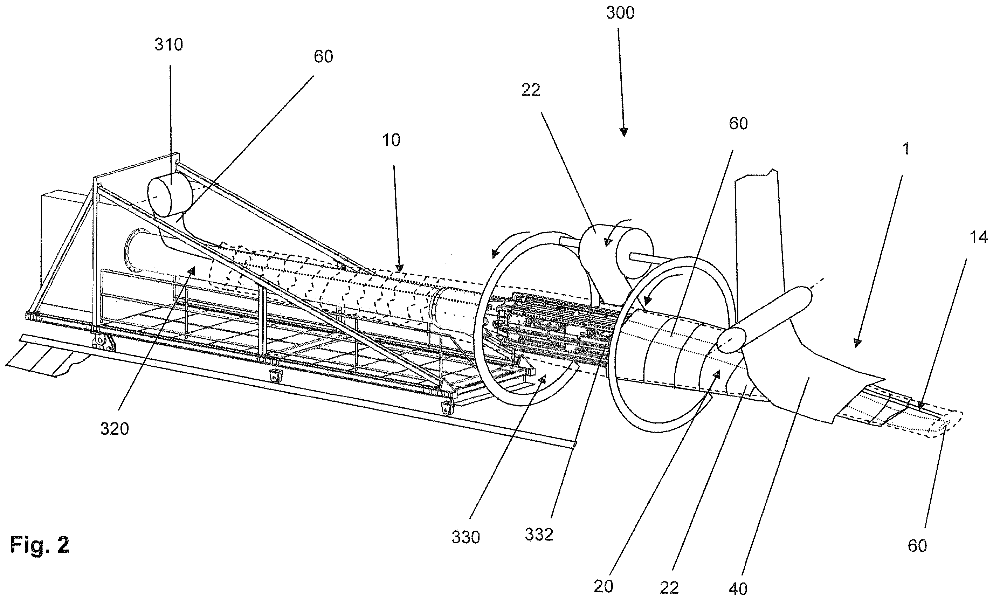

Alternativ besteht die Möglichkeit, den weiteren Innenfolienschlauch 60, der in der vorliegenden Anmeldung auch als zweiter Innenfolienschlauch bezeichnet wird, bereits während der Fertigung werkseitig in den Innenfolienschlauch 10 einzulegen, wenn dieser wie in Fig. 2 gezeigt auf einer bekannten Wickelvorrichtung 300 gefertigt wird. Hierzu wird der weitere Innenfolienschlauch 60 als ein- oder mehrfach gefaltete Bahn von einer ortsfest angeordneten Vorratsrolle 310 abgerollt und im Inneren des Innenfolienschlauchs 10 auf der Außenseite des Wickelrohres 320 der Wickelvorrichtung 300 entlanggeführt, auf welches der Innenfolienschlauch 10 zuvor aufgestrippt wurde. Im Bereich des Wickeldorns 330 wird der weitere Innenfolienschlauch 60 bevorzugt zwischen den umlaufenden Transportriemen 332 entlang geführt, welche den Innenfolienschlauch 10 vorschieben, wenn das/die Faserbänder 22, wie in Fig. 2 gezeigt, in bekannter Weise von einer Vorratsrolle abgezogen und schraubenförmig um die Außenseite des Innenfolienschlauchs 10 herum gewickelt werden. Auf den so gebildeten Aufbau aus innenliegendem weiteren Innenfolienschlauch 60, Innenfolienschlauch 10 und Lage 20 aus Faserband 22 werden ferner noch ein vorzugsweise für Styrol und UV-Licht undurchlässiger Außenfolienschlauch 40 sowie ggf. ein weiterer Außenfolienschlauch 50 aus reißfestem Werkstoff als geschlossene weitere Lagen aufgebracht, welche in Fig 2 jedoch der Übersichtlichkeit wegen nur teilweise, bzw. nicht dargestellt sind.

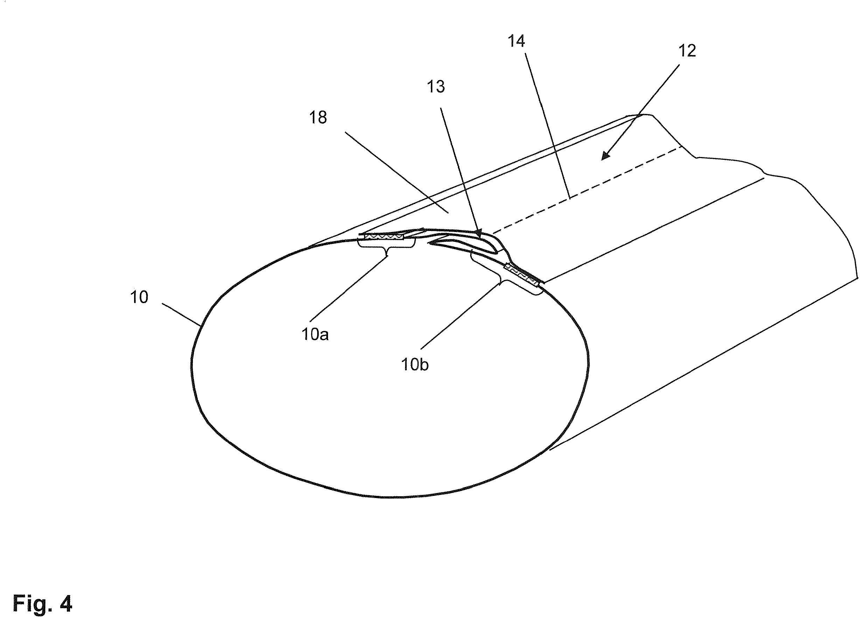

Bei dem zuvor anhand von Fig. 2 beschriebenen Herstellungsverfahren für den erfindungsgemäßen Auskleidungsschlauch 1 kann alternativ zu einem in Fig. 1 und Fig. 3 gezeigten Innenfolienschlauch, welcher durch Verkleben/Verschweißen der Längsabschnitte einer Flachfolie 16 erhalten wird, ein in Umfangsrichtung nahtloser Folienschlauch als Innenfolienschlauch 10 eingesetzt werden, der einen kreisförmigen Querschnitt mit einem Durchmesser besitzt, welcher mehr als 10%, bevorzugt mehr als 40% des Nenndurchmessers des ersten Rohrabschnitts 110 beträgt, und der bevorzugt dem Durchmesser des zweiten erweiterten Rohrabschnitt 120 eines zu sanierenden Kanalrohres 110 entspricht. Die beiden benachbart zueinander angeordneten außenliegenden Umfangsabschnitte 10a, 10b des nahtlosen Folienschlauchs 10 sind bei dieser, in Fig. 4 gezeigten Ausführungsform der Erfindung im Bereich des Verbindungsabschnitts 12 unter Bildung einer in Umfangsrichtung des Innenfolienschlauchs 10 verlaufenden, sich über die Länge des Innenfolienschlauchs 10 hinweg erstreckenden Folienschlaufe 13 bevorzugt durch einen aufgeklebten oder thermisch aufgeschweißten transparenten Folienstreifen 18 verbunden, der die Folienschlaufe 13 überspannt und abdeckt. Hierdurch wird in vorteilhafter Weise ein Verbindungsabschnitt 12 mit einer Sollbruchstelle 14 bereitgestellt, die in Fig. 4 entlang des ersten und zweiten Umfangsabschnitts 10a, 10b exemplarisch im Bereich der Klebestelle oder Schweißnaht verläuft. Der Verbindungsabschnitt 12 ist schematisch durch die gestrichelten Linien in Fig. 4 angedeutet.

Beim Einsetzen und Expandieren des Innenfolienschlauchs 10 der Ausführungsform von Fig. 4 spielt es dabei in vorteilhafter Weise keine Rolle, ob die in der Darstellung rechte oder linke Schweißnaht/Klebestelle beim Expandieren des Auskleidungsschlauchs 1 im erweiterten zweiten Schachtabschnitt 120 aufreißt, da durch den in Umfangsrichtung vollständig geschlossenen Innenfolienschlauch 10 stets für ein abgeschlossenes Luftvolumen im Inneren des Auskleidungsschlauchs 1 gesorgt wird, welches ein Ausblasen des Reaktionsharzes beim Expandieren desselben zuverlässig verhindert. In besonders vorteilhafter Weise kann bei dieser Ausführungsform der weitere Innenfolienschlauch 60 entfallen, da die Luftdichtheit stets durch den schlaufenartig gelegten umfänglich geschlossenen Innenfolienschlauch 10 gewährleistet ist.

Ein weiterer Vorteil dieser Ausführungsform besteht darin, dass ein und derselbe nahtlose Innenfolienschlauch für einen ganzen Bereich von Leitungs-Nenndurchmesser eingesetzt werden kann. Anders ausgedrückt kann ein solcher nahtloser Innenfolienschlauch mit einem Nenndurchmesser DN von z.B. 600 mm auch zur Herstellung von Auskleidungsschläuchen verwendet werden, welche zur Sanierung von Kanalrohren mit einem Nenndurchmesser DN von z.B. lediglich 500 mm oder 550 mm eingesetzt werden können.

Hierzu ist es lediglich notwendig, die Länge der Folienschlaufe 13 soweit zu vergrößern, bis der Außendurchmesser des an der Sollbruchstelle 14 verbundenen Folienmaterials des Innenfolienschlauchs 10 dem gewünschten definierten Nenndurchmesser DN des Auskleidungsschlauchs entspricht, welcher als Grund-Typ für die Sanierung einer ganzen Klasse von Kanalrohren eingesetzt werden soll, deren Durchmesser im Wesentlichen jeweils konstant ist und z.B. im Bereich zwischen 500 mm und 600 mm liegt.

Soll beispielsweise ein Grund-Typ für einen Auskleidungsschlauch erzeugt werden, welcher zur Sanierung von Kanalrohren mit einem Durchmesser von 520 mm, 530mm, 550 mm, 580 mm und 600 mm einsetzbar ist, so wird die Länge der Folienschlaufe 13 eines nahtlosen Innenfolienschlauchs mit einem Nenndurchmesser von 600 mm so gewählt, dass der definierte Nenndurchmesser nach dem Verkleben/Verschweißen der beiden Umfangsabschnitte 10a, 10b im Verbindungsabschnitte 12, d.h. dem Erzeugten der Sollbruchstelle 14, lediglich 500 mm beträgt. Dieser Innenfolienschlauch 10 wird dann wie in Fig. 2 gezeigt, schraubenförmig mit Faserbändern 22 umwickelt und mit einem Außenfolienschlauch 40 sowie ggf. einem weiteren Außenfolienschlauch 50 umhüllt. Der so erzeugte Auskleidungsschlauch 1 kann dann in Kanalrohre 100 mit einem im Wesentlichen konstanten Nenndurchmesser von 520 mm, 530 mm, 550 mm, 580 mm oder gar 600 mm eingezogen und in herkömmlicher Weise expandiert und durch UV-Licht ausgehärtet werden. Anders ausgedrückt eröffnet die Erfindung ebenfalls die Möglichkeit, die Anzahl der bei der Sanierung von Rohrleitungen mit einem konstanten Durchmesser DN zwischen 150 mm und 1000 mm bisher benötigten ca. 40 verschiedenen Grund-Typen von speziell gefertigten nahtlosen Innenfolienschläuchen mit einem jeweiligen Nenndurchmesser DN auf wenige Grund-Typen, z.B. 5 Grund-Typen, zu reduzieren. Ein weiterer besonderer zeitlicher Vorteil ergibt sich zudem dadurch, dass bei der Produktion des Grund-Type des Auskleidungsschlauchs die Wickelvorrichtung 300 nur einmal eingestellt werden muss, und lediglich für jeden Grund-Typ ein einziger nahtloser Innenfolienschlauch 10 vorgehalten werden muss.

Um bei einer Lage aus Fasermaterial 20, die, wie in Fig. 2 angedeutet, durch überlappendes schraubenförmiges Wickeln erhalten wird, eine ausreichend hohe umfängliche Dehnbarkeit der Lage zu gewährleisten, besitzt diese bevorzugt wenigstens ein schraubenförmig überlappend gewickeltes Faserband, insbesondere Glasfaserband 22, dessen Fasermaterial eine Dehnbarkeit in Längsrichtung von mehr als 10 % bezogen auf die Gesamtlänge des Bandes aufweist. Wie von der Anmelderin gefunden wurde, erlaubt diese große Längsdehnung eine entsprechend große radiale Aufdehnung der aus dem schraubenförmig überlappend gewickelten Faserband hergestellten Lage 20 um mehr als 10 %, insbesondere mehr als 30 %, bis hin zu 60 %, ohne dass ein signifikanter Schrumpf in Längsrichtung des Auskleidungsschlauchs 1 auftritt.

Wie der Darstellung der Fig. 1 weiterhin entnommen werden kann, ist bei den zuvor beschriebenen Ausführungsformen von Auskleidungsschläuchen 1 auf der Lage aus Fasermaterial 20 bevorzugt wenigstens ein Längszugband 30 angeordnet, welches sich in Längsrichtung des Auskleidungsschlauchs 1 erstreckt. Das Längszugband 30, welches in Fig. 2 aus darstellungstechnischen Gründen nicht mit eingezeichnet ist, umfasst bevorzugt durchgängige Glasfasern oder Glasfaser-Rovinge, die bevorzugt über die gesamte Länge des Auskleidungsschlauchs 1 hinweg verlaufen und die die Axialkräfte aufnehmen, wenn der Auskleidungsschlauch 1 beispielsweise mittels eines Zugseils in ein zu sanierendes defektes Kanalrohr 100 eingezogen wird.

Wie bereits zuvor erwähnt wurde, wird bei der bevorzugten Ausführungsform des Auskleidungsschlauchs 1 um die Lage aus Fasermaterial 20 herum ein Außenfolienschlauch 40 angeordnet, welcher bevorzugt einen Durchmesser besitzt, der größer oder gleich dem Durchmesser des weiteren Innenfolienschlauchs 60 ist, und der bevorzugt eine Barriere gegen den Austritt von schädlichen Substanzen, insbesondere Styrol, aus dem Reaktionsharz in das umliegende Erdreich verhindert. Der Außenfolienschlauch 40 kann zudem von einem in Fig. 1 abschnittsweise dargestellten weiteren Außenfolienschlauch 50 umgeben sein, der aus einem verstärkten zugfesten und für UV-Licht undurchlässigen Werkstoff besteht, insbesondere aus einer gewebeverstärkten Kunststofffolie, die mit einem umfänglich dehnbaren Abschnitt versehen ist, welcher beim Expandieren des Auskleidungsschlauchs ab einem vorgegebenen Überdruck, beispielsweise 0,2 bar, in dem zu sanierenden Kanalrohr 100 mit konstantem größeren Durchmesser, bzw. im zweiten Rohrabschnitt 120 ähnlich der Sollbruchstelle 14 des Innenfolienschlauchs 10 aufplatzt und eine radiale Dehnung der Lage aus Fasermaterial 20 erlaubt.

Die Erfindung betrifft weiterhin ein Verfahren zum Auskleiden eines defekten Kanalrohres 100, das nachfolgend mit Bezug auf die Darstellung von Fig. 5 näher beschrieben wird. Das Kanalrohr 100 umfasst einen ersten Rohrabschnitt 110 mit einem ersten Durchmesser und einen sich daran anschließenden zweiten Rohrabschnitt 120 mit einem erweiterten Durchmesser.

Um das defekte Kanalrohr 100 zu sanieren, wird ein zuvor beschriebener Auskleidungsschlauch 1 in das defekte Kanalrohr 100 eingezogen und die beiden Enden des Auskleidungsschlauchs 1 mit einem Packer 200 verschlossen. Im Anschluss daran wird der Auskleidungsschlauch 1 durch Einleiten eines Druckmediums, insbesondere Druckluft aus einer Druckluftquelle 6 in den Innenfolienschlauch 10, bzw. den weiteren Innenfolienschlauch 60, wenn ein solcher zum Einsatz gelangt, expandiert. Dadurch legt sich der Auskleidungsschlauch im ersten Rohrabschnitt 110 unmittelbar an dessen Innenwand an, wobei die Sollbruchstelle 14 verschlossen bleibt. Im zweiten Rohrabschnitt 120 mit erweitertem Durchmesser weitet sich der Innenfolienschlauch 10 im Inneren des Kanalrohres 100 unter Auftrennung der Sollbruchstelle 14 im Verbindungsabschnitt 12 radial auf, wobei das Fasermaterial der Lage 20 ebenfalls radial mit aufgeweitet wird. Bei der in Fig. 4 gezeigten Ausfiihrungsform des Innenfolienschlauchs 10, bei der ein durch eine Folienschlaufe 13 geraffter nahtloser Innenfolienschlauch, insbesondere eine PE-PA Folie zum Einsatz gelangt, liegt in diesem Falle der nahtlose Innenfolienschlauch 10 unmittelbar am Fasermaterial der Lage 20 an und dichtet dadurch den Innenraum des Innenfolienschlauch 10 luftdicht gegenüber dem Fasermaterial ab.

Bei der in Fig. 1 und 3 gezeigten Ausführungsform des Innenfolienschlauchs 10, bei der aufgrund des Schweißvorgangs, bzw. Klebevorgangs eine Luftundurchlässigkeit von 100 % nicht sichergestellt werden kann und aus diesem Grunde ein weiterer (zweiter) Innenfolienschlauch 60 in den Innenfolienschlauch 10 eingelegt oder bei der Herstellung eingezogen wird, wird das Druckgas demgegenüber in den weiteren Innenfolienschlauch 60 eingeleitet, der in bekannter Weise über die Außenseite der Packer 200 geführt wird. An diesen wird der Auskleidungsschlauch in bekannter Weise z.B. durch jeweils einen oder mehrere Spanngurte 210, die im Bereich der Packer 200 um die Außenseite des Auskleidungsschlauchs 1 herumgeführt werden, vor der Einleitung des Druckgases in den weiteren Innenfolienschlauch 60 luftdicht befestigt.

In einem letzten Verfahrensschritt wird das Reaktionsharz in der Lage 20 aus Fasermaterial in bekannter Weise durch Einbringen und Hindurchziehen einer nicht näher gezeigten Strahlungsquelle durch den Innenraum des weiteren Innenfolienschlauchs 60 ausgehärtet.

Das zuvor beschriebene Verfahren ist in analoger Weise zur Sanierung von Kanalrohren 100 mit einem konstanten Querschnitt einsetzbar, deren Durchmesser zwischen dem definierten Nenndurchmesser des Auskleidungsschlauchs 1 mit geschlossenem Verbindungsabschnitt 12 einerseits und dem Nenndurchmesser des nahtlosen Innenfolienschlauchs 10 mit Folienschlaufe 13, bzw. dem Nenndurchmesser des weiteren (zweiten) Innenfolienschlauchs 60 andererseits liegt, je nachdem, welche Ausführungsform bei dem erfindungsgemäßen Verfahren verwendet wird.

### Bezugszeichenliste

- 1: Auskleidungsschlauch
- 6: Druckgasquelle
- 10: Innenfolienschlauch
- 10a: erster Umfangsabschnitt des Innenfolienschlauchs
- 10b: zweiter Umfangsabschnitt des Innenfolienschlauchs
- 12: Verbindungsabschnitt
- 13: Folienschlaufe
- 14: Sollbruchstelle
- 16: zu Schlauch geformte Flachfolie
- 16a: Randabschnitt
- 16b: Randabschnitt
- 17a: Längsrand
- 17b: Längsrand
- 18: aufgeschweißter Folienstreifen
- 20: Lage aus Fasermaterial
- 22: Faserband
- 30: Längszugband
- 40: Außenfolienschlauch
- 50: weiterer Außenfolienschlauch aus verstärktem zugfestem Werkstoff
- 60: weiterer(zweiter) Innenfolienschlauch
- 100: Kanalrohr
- 110: erster Rohrabschnitt
- 120: zweiter Rohrabschnitt
- 200: Packer
- 210: Spanngurt
- 300: Wickelvorrichtung
- 310: Vorratsrolle für weiteren Innenfolienschlauch
- 320: Wickelrohr
- 330: Wickeldorn
- 332: Transportriemen

## Patentansprüche

1. Auskleidungsschlauch (1) zur Sanierung eines defekten Kanalrohres (100), umfassend einen für UV-Licht transparenten Innenfolienschlauch (10) sowie eine um diesen herum angeordnete, radial aufweitbare Lage aus Fasermaterial (20), welches mit einem durch UV-Licht härtbaren Reaktionsharz getränkt ist, wobei der Innenfolienschlauch (10) einen sich in Längsrichtung desselben erstreckenden Verbindungsabschnitt (12) aufweist, welcher zwei parallel zueinander verlaufende Umfangsabschnitte (10a), (10b) des Innenfolienschlauchs (10) zu einem umfänglich geschlossenen Innenfolienschlauch (10) mit einem definierten Nenndurchmesser verbindet, und wobei der Verbindungsabschnitt (12) eine sich entlang des Innenfolienschlauchs (10) erstreckende Sollbruchstelle (14) besitzt, die durch Einbringen eines Druckmediums in den Innenfolienschlauch in Umfangsrichtung auftrennbar ist, um den Innenfolienschlauch (10) und die darauf angeordnete Lage aus Fasermaterial (20) radial über den Nenndurchmesser hinaus aufzuweiten.

2. Auskleidungsschlauch nach Anspruch 1,
**dadurch gekennzeichnet,**
**dass** der Innenfolienschlauch (10) wenigstens eine zu einem Schlauch geformte Flachfolie (16) umfasst, deren Längsränder (17a), (17b) im Abstand zueinander verlaufen und durch einen auf die Außenseite oder Innenseite aufgeklebten oder thermisch aufgeschweißten transparenten Folienstreifen (18) verbunden sind.

3. Auskleidungsschlauch nach Anspruch 1,
**dadurch gekennzeichnet,**
**dass** der Innenfolienschlauch wenigstens eine zu einem Schlauch geformte Flachfolie (16) umfasst, deren Randabschnitte (16a), (16b) mit einem transparenten Klebeband verbunden sind oder überlappend übereinander geführt und durch Klebstoff, ein transparentes doppelseitiges Klebeband oder thermisches Verschweißen miteinander verbunden sind.

4. Auskleidungsschlauch nach Anspruch 1,
**dadurch gekennzeichnet,**
**dass** der Innenfolienschlauch (10) ein in Umfangsrichtung nahtloser Folienschlauch ist, der einen kreisförmigen Querschnitt mit einem Durchmesser besitzt, der mehr als 10%, bevorzugt mehr als 40% des Nenndurchmessers beträgt, und dass zwei parallel zueinander angeordnete außenliegende Umfangsabschnitte (10a), (10b) des nahtlosen Folienschlauchs (10) im Bereich des Verbindungsabschnitts (12) unter Bildung einer in Umfangsrichtung des Innenfolienschlauchs (10) verlaufenden, sich über die Länge des Innenfolienschlauchs (10) hinweg erstreckende Folienschlaufe (13) durch einen aufgeklebten oder thermisch aufgeschweißten transparenten Folienstreifen (18), der die Folienschlaufe (13) überspannt, miteinander verbunden sind.

5. Auskleidungsschlauch nach einem der vorhergehenden Ansprüche,
**dadurch gekennzeichnet,**
**dass** die Lage aus Fasermaterial (20) wenigstens ein schraubenförmig überlappend gewickeltes Faserband (22) oder wenigstens ein sich in Längsrichtung des Auskleidungsschlauchs (1) erstreckendes, an seinen Längsrändern überlappend gelegtes Faserband (22) umfasst, dessen Fasermaterial eine Dehnbarkeit von mehr als 10 % besitzt, derart, dass die schlauchförmige Lage (20) aus Fasermaterial durch Einleiten eines Druckmediums in den Innenraum des Auskleidungsschlauchs (1) radial von einem ersten Durchmesser auf einen zweiten Durchmesser vergrößerbar ist, dessen Größe die Größe des ersten Durchmessers um wenigstens 10 %, insbesondere mehr als 30 %, übersteigt.

6. Auskleidungsschlauch nach einem der vorhergehenden Ansprüche,
**dadurch gekennzeichnet,**
**dass** auf der Lage aus Fasermaterial (20) ein sich in Längsrichtung des Auskleidungsschlauchs (1) erstreckendes Längszugband (30) angeordnet ist, welches in Längsrichtung des Auskleidungsschlauchs (1) verlaufende Glasfasern und/oder Glasfaserrovinge zur Aufnahme und Übertragung von Axialkräften beim Einziehen des Auskleidungsschlauchs (1) in ein Kanalrohr (100) enthält, und/oder dass um die Lage aus Fasermaterial (20) ein Außenfolienschlauch (40) und optional ein insbesondere für UV-Licht undurchlässiger weiterer Außenfolienschlauch (50) aus einem verstärkten zugfesten Werkstoff, insbesondere einer gewebeverstärkten Kunststofffolie, zur Aufnahme von axialen Zugkräften angeordnet ist.

7. Auskleidungsschlauch nach einem der vorhergehenden Ansprüche,
**dadurch gekennzeichnet,**
**dass** innerhalb des Innenfolienschlauchs (10) ein sich in Längsrichtung des Auskleidungsschlauchs (1) über dessen gesamte Länge hinweg erstreckender weiterer Innenfolienschlauch (60) aus einem luftdichten transparenten Kunststoffmaterial angeordnet ist.

8. Verfahren zur Herstellung eines Auskleidungsschlauch nach einem der vorhergehenden Ansprüche,
**gekennzeichnet durch** die folgenden Verfahrensschritte:
Formen einer transparenten Kunststoff-Flachfolie (16) zu einem für UV-Licht transparenten, umfänglich geschlossenen Innenfolienschlauch (10) mit einem vorgegebenen Nenndurchmesser durch überlappendes Verkleben oder Verschweißen der Längsränder (17a, 17b) der transparenten Kunststoff-Flachfolie (16) und/oder durch Aufkleben oder thermisches Aufschweißen eines transparenten Folienstreifens (18) auf zwei benachbarte außenliegende parallel zueinander verlaufenden Umfangsabschnitte (10a), (10b) der schlauchförmig angeordneten Kunststoff-Flachfolie (16) unter Erzeugung eines Verbindungsabschnitts (12), welcher eine in Längsrichtung des Innenfolienschlauchs (10) verlaufende Sollbruchstelle (14) aufweist, und Anordnen einer Lage aus Fasermaterial (20) auf der Außenseite des umfänglich geschlossenen schlauchförmigen Innenfolienschlauchs (10) durch überlappendes schraubenförmiges Wickeln oder überlappendes Legen von wenigsten einem Faserband (22), insbesondere Glasfaserband, um den Innenfolienschlauch (10) herum, welches mit einem durch UV-Licht härtbaren Reaktionsharz getränkt.

9. Verfahren nach Anspruch 8,
**dadurch gekennzeichnet,**
**dass** auf die Kunststoff-Flachfolie (16) ein sich über die Länge des Auskleidungsschlauchs (1) hinweg erstreckender weiterer transparenter umfänglich luftdicht geschlossener Innenfolienschlauch (60) aufgelegt wird, bevor die Kunststoff-Flachfolie (16) zu dem umfänglich geschlossenen Innenfolienschlauch (10) geformt wird, oder dass ein umfänglich luftdicht geschlossener Innenfolienschlauch (60) während des schraubenförmigen Wickelns in den Innenraum eines vorgefertigten umfänglich luftdichten geschlossenen Innenfolienschlauchs mit einer Sollbruchstelle (14) auf einer Wickelvorrichtung eingelegt wird.

10. Verfahren zum Auskleiden eines defekten Kanalrohres (100),
**gekennzeichnet durch** die folgenden Verfahrensschritte:
Einziehen eines Auskleidungsschlauchs (1) nach Anspruch 4 in das defekte Kanalrohr (100), Verschließen der beiden Enden des Auskleidungsschlauchs (1) mit einem Packer (200), Expandieren des Auskleidungsschlauchs (1) durch Einleiten eines Druckmediums, insbesondere Druckluft, in den Innenfolienschlauch (10) derart, dass sich der Auskleidungsschlauch (1) im Inneren des Kanalrohres (100) unter Auftrennung der Sollbruchstelle (14) im Verbindungsabschnitt (12) radial aufweitet und an die Innenwand des Kanalrohres (100) anlegt, und Aushärten des Reaktionsharzes in der Lage (20) aus Fasermaterial durch Einbringen einer Strahlungsquelle in den Innenraum des Innenfolienschlauchs (10).

11. Verfahren zum Auskleiden eines defekten Kanalrohres (100), ,
**gekennzeichnet durch** die folgenden Verfahrensschritte:
Einziehen eines Auskleidungsschlauchs (1) nach Anspruch 7 in das defekte Kanalrohr (100), Verschließen der beiden Enden des Auskleidungsschlauchs (1) mit einem Packer (200), Expandieren des Auskleidungsschlauchs (1) durch Einleiten eines Druckmediums, insbesondere Druckluft, in den weiteren Innenfolienschlauch (60) derart, dass sich der Auskleidungsschlauch (1) im Inneren des Kanalrohres (100) unter Auftrennung der Sollbruchstelle (14) im Verbindungsabschnitt (12) radial aufweitet und an die Innenwand des Kanalrohrs (100) anlegt, und Aushärten des Reaktionsharzes in der Lage (20) aus Fasermaterial durch Einbringen einer Strahlungsquelle in den Innenraum des weiteren Innenfolienschlauchs (60).

## Claims

1. A lining tube (1) for reconditioning of a defective sewer pipe (100), comprising an inner film tube (10) which is transparent for UV light, and a radially expandable ply of fiber material (20) which is arranged around said tube and has been impregnated with a UV curable reaction resin, wherein the inner film tube (10) has a connecting section (12), which extends in the longitudinal direction thereof and connects two mutually parallel circumferential sections (10a), (10b) of the inner film tube (10) to give a circumferentially closed inner film tube (10) which has a defined nominal diameter, and wherein the connecting section (12) has a predetermined breaking point (14) which extends along the inner film tube (10) and can be parted in the circumferential direction by introducing a pressure medium into the inner film tube in order to expand the inner film tube (10) and the ply of fiber material (20) arranged thereon radially beyond the nominal diameter.

2. Lining tube as claimed in claim 1, **characterized in that** the inner film tube (10) comprises at least one flat film (16) formed into a tube, the longitudinal edges (17a), (17b) of which extend at a distance from one another and are connected by a transparent film strip (18) adhesively bonded or thermally welded onto the outside or inside.

3. Lining tube as claimed in claim 1, **characterized in that** the inner film tube comprises at least one flat film (16) formed into a tube, the edge sections (16a), (16b) of which are connected by a transparent adhesive tape or are guided one over the other so as to overlap and are connected to one another by adhesive, a transparent double-sided adhesive tape or by thermal welding.

4. Lining tube as claimed in claim 1, **characterized in that** the inner film tube (10) is a film tube which is seamless in the circumferential direction and which has a circular cross section with a diameter which is more than 10%, preferably more than 40%, of the nominal diameter, and **in that** two outer circumferential sections (10a), (10b) of the seamless film tube (10), which are arranged parallel to one another, are connected to one another in the region of the connecting section (12), forming a film loop (13) running in the circumferential direction of the inner film tube (10) and extending over the length of the inner film tube (10), by means of a transparent film strip (18) which is adhesively bonded on or thermally welded on and spans the film loop (13).

5. Lining tube as claimed in any of the preceding claims, **characterized in that** the ply of fiber material (20) comprises at least one fiber tape (22) wound in a helically overlapping manner or at least one fiber tape (22) which extends in the longitudinal direction of the lining tube (1) and is laid in an overlapping manner at its longitudinal edges, the fiber material of which has a stretching capacity of more than 10%, such that the tubular ply (20) of fiber material can be enlarged radially from a first diameter to a second diameter, the size of which exceeds the size of the first diameter by at least 10%, in particular more than 30%, by introducing a pressure medium into the interior of the lining tube (1).

6. Lining tube as claimed in any of the preceding claims, **characterized in that** a longitudinal tension tape (30) extending in the longitudinal direction of the lining tube (1) is arranged on the ply of fiber material (20), which tape contains glass fibers and/or glass fiber rovings running in the longitudinal direction of the lining tube (1) for absorbing and transmitting axial forces as the lining tube (1) is pulled into a sewer pipe (100), and/or **in that** an outer film tube (40) and optionally a further outer film tube (50), in particular an outer film tube that is impermeable to UV light, consisting of a reinforced, tension-resistant material, in particular a fabric-reinforced plastic film, is arranged around the ply of fiber material (20) to absorb axial tensile forces.

7. Lining tube as claimed in any of the preceding claims, **characterized in that** a further inner film tube (60) consisting of an airtight transparent plastic material and extending over the entire length of the lining tube (1) in the longitudinal direction of the latter is arranged within the inner film tube (10).

8. Method of producing a lining tube as claimed in any of the preceding claims, **characterized by** the following method steps:
forming of a transparent plastic flat film (16) into a circumferentially closed inner film tube (10) which is transparent for UV light, having a predetermined nominal diameter by adhesively bonding or welding the longitudinal edges (17a, 17b) of the transparent plastic flat film (16) in an overlapping manner and/or by adhesively bonding or thermally welding a transparent film strip (18) onto two adjacent, mutually parallel outer circumferential sections (10a), (10b) of the plastic flat film (16) arranged in the form of a tube to produce a connecting section (12) which has a predetermined breaking point (14) running in the longitudinal direction of the inner film tube (10), and arrangement of a ply of fiber material (20) on the outside of the circumferentially closed tubular inner film tube (10) by overlapping helical winding or overlapping laying of at least one fiber tape (22), in particular glass fiber tape, which is impregnated with an UV curable resin, around the inner film tube (10).

9. Method as claimed in claim 8, **characterized in that** a further, transparent, circumferentially airtightly closed inner film tube (60) extending over the length of the lining tube (1) is laid on the plastic flat film (16) before the plastic flat film (16) is formed into the circumferentially closed inner film tube (10), or **in that** a circumferentially airtightly closed inner film tube (60) is inserted into the interior of a pre produced circumferentially airtightly closed inner film tube having a predetermined breaking point (14) on a winding device during the process of helical winding.

10. Method for lining a defective sewer pipe (100), **characterized by** the following method steps:
Pulling a lining tube (1) as claimed in claim 4 into the defective sewer pipe (100), closing the two ends of the lining tube (1) with a packer (200), expanding the lining tube (1) by introducing a pressure medium, in particular compressed air, into the inner film tube (10) in such a way that the lining tube (1) expands radially in the interior of the sewer pipe (100), thereby parting the predetermined breaking point (14) in the connecting section (12), and comes to rest against the inner wall of the sewer pipe (100), and curing the reaction resin in the ply (20) of fiber material by introducing a source of radiation into the interior of the inner film tube (10).

11. Method for lining a defective sewer pipe (100), **characterized by** the following method steps:
Pulling a lining tube (1) as claimed in claim 7 into the defective sewer pipe (100), closing the two ends of the lining tube (1) with a packer (200), expanding the lining tube (1) by introducing a pressure medium, in particular compressed air, into the further inner film tube (60) in such a way that the lining tube (1) expands radially in the interior of the sewer pipe (100), thereby parting the predetermined breaking point (14) in the connecting section (12), and comes to rest against the inner wall of the sewer pipe (100), and curing the reaction resin in the ply (20) of fiber material by introducing a source of radiation into the interior of the further inner film tube (60).

## Revendications

1. Gaine de chemisage (1) pour la rénovation d'un tuyau d'égout défectueux (100), comprenant un tuyau de film interne (10) transparent à la lumière UV ainsi qu'une couche de matériau fibreux (20) disposée autour de celui-ci et pouvant être élargie radialement, qui est imprégnée d'une résine réactive durcissable par la lumière UV,
**caractérisé en ce que** le tuyau de film intérieur (10) présente une section de liaison (12) s'étendant dans la direction longitudinale de celui-ci, qui relie deux sections périphériques (10a), (10b) parallèles entre elles du tuyau de film intérieur (10) pour former un tuyau de film intérieur (10) fermé sur sa périphérie avec un diamètre nominal défini, et **en ce que** la section de liaison (12) possède un point destiné à la rupture (14) s'étendant le long du tuyau de film intérieur (10), qui peut être séparé dans la direction périphérique par l'introduction d'un fluide sous pression dans le tuyau de film intérieur, afin d'élargir le tuyau de film intérieur (10) et la couche de matériau fibreux (20) disposée sur celui-ci radialement au-delà du diamètre nominal.

2. Gaine de chemisage selon la revendication 1,
**caractérisé en ce que** le tube de film intérieur (10) comprend au moins un film plat (16) formé en un tube, dont les bords longitudinaux (17a), (17b) s'étendent à distance l'un de l'autre et sont reliés par une bande de film transparent (18) collée ou soudée thermiquement sur le côté extérieur ou le côté intérieur.

3. Gaine de chemisage selon la revendication 1,
**caractérisé en ce que** le tube de film intérieur comprend au moins un film plat (16) formé en un tube, dont les sections de bord (16a), (16b) sont reliées par un ruban adhésif transparent ou sont guidées les unes sur les autres en se chevauchant et sont reliées entre elles par de la colle, un ruban adhésif double face transparent ou un soudage thermique.

4. Gaine de chemisage selon la revendication 1,
**caractérisé en ce que** le tube de film intérieur (10) est un tube de film sans soudure dans la direction périphérique, qui possède une section transversale circulaire avec un diamètre qui est supérieur à 10 %, de préférence supérieur à 40 % du diamètre nominal, et **en ce que** deux sections périphériques extérieures (10a) disposées parallèlement entre elles, (10b) du tuyau en film sans soudure (10) sont reliées entre elles dans la zone du tronçon de liaison (12) en formant une boucle de film (13) s'étendant dans la direction périphérique du tuyau en film intérieur (10) et sur la longueur du tuyau en film intérieur (10) par une bande de film transparente (18) collée ou soudée thermiquement, qui recouvre la boucle de film (13).

5. Gaine de chemisage selon l'une des revendications précédentes,
caractérisé en en ce que la couche de matériau fibreux (20) comprend au moins un ruban de fibres (22) enroulé de manière à se chevaucher en forme d'hélice ou au moins un ruban de fibres (22) s'étendant dans le sens longitudinal du tuyau de revêtement (1), posé de manière à se chevaucher sur ses bords longitudinaux, dont le matériau fibreux possède une extensibilité de plus de 10 %, de telle sorte, que la couche tubulaire (20) en matériau fibreux peut être agrandie radialement d'un premier diamètre à un deuxième diamètre par introduction d'un fluide sous pression dans l'espace intérieur du tuyau de revêtement (1), dont la taille dépasse la taille du premier diamètre d'au moins 10 %, en particulier de plus de 30 %.

6. Gaine de chemisage selon l'une des revendications précédentes,
**caractérisé en ce qu'**une bande de traction longitudinale (30) s'étendant dans le sens longitudinal du tuyau de revêtement (1) est disposée sur la couche de matériau fibreux (20), laquelle contient des fibres de verre et/ou des anneaux de fibres de verre s'étendant dans le sens longitudinal du tuyau de revêtement (1) pour absorber et transmettre des forces axiales lors de l'insertion du tuyau de revêtement (1) dans un tuyau de canalisation (100), et/ou **en ce qu'**autour de la couche de matériau fibreux (20) est disposé un tuyau de film extérieur (40) et, en option, un autre tuyau de film extérieur (50), en particulier opaque à la lumière UV, en un matériau renforcé résistant à la traction, en particulier un film plastique renforcé par un tissu, pour absorber les forces de traction axiales.

7. Gaine de chemisage selon l'une des revendications précédentes,
en ce que, à l'intérieur du tube de film intérieur (10), est disposé un autre tube de film intérieur (60) s'étendant dans le sens longitudinal du tube de revêtement (1) sur toute sa longueur et constitué d'un matériau plastique transparent étanche à l'air.

8. Procédé de fabrication d'une gaine de chemisage selon l'une quelconque des revendications précédentes,
**caractérisé par** les étapes de procédé suivantes :
Former un film plastique plat transparent (16) en un tuyau de film intérieur (10) fermé sur son pourtour et transparent à la lumière UV, d'un diamètre nominal donné, en collant ou en soudant par recouvrement les bords longitudinaux (17a, 17b) de la feuille plate en matière plastique transparente (16) et/ou par collage ou soudage thermique d'une bande de feuille transparente (18) sur deux sections périphériques extérieures voisines (10a), (10b) s'étendant parallèlement l'une à l'autre de la feuille plate en matière plastique (16) disposée en forme de tuyau, en produisant une section de liaison (12), qui présente un point destiné à la rupture (14) s'étendant dans la direction longitudinale du tube de film intérieur (10), et en disposant une couche de matériau fibreux (20) sur le côté extérieur du tuyau de film intérieur (10) fermé sur sa périphérie, en forme de tuyau, par enroulement hélicoïdal à recouvrement ou par pose à recouvrement d'au moins un ruban de fibres (22) imprégné de résine, en particulier un ruban de fibres de verre, autour du tube de film intérieur (10), qui est imprégné d'une résine réactive durcissable par la lumière UV.

9. Procédé selon la revendication 8,
**caractérisé en ce qu'**un autre tuyau de film intérieur (60) transparent, fermé de manière étanche à l'air sur la circonférence et s'étendant sur la longueur du tube de revêtement (1) est placé sur le film plat en plastique (16) avant que le film plat en plastique (16) ne soit formé en tuyau de film intérieur (10) fermé sur la circonférence, ou **en ce qu'**un tuyau de film intérieur (60) fermé de manière étanche à l'air sur sa périphérie est inséré pendant l'enroulement hélicoïdal dans l'espace intérieur d'un tuyau de film intérieur fermé étanche à l'air sur sa périphérie préfabriqué avec un point destiné à la rupture (14) sur un dispositif d'enroulement.

10. Procédé de chemisage d'un tuyau d'égout défectueux (100),
**caractérisé par** les étapes de procédé suivantes :
Introduction d'un tuyau de chemisage (1) selon la revendication 4 dans le tuyau de canalisation défectueux (100), fermeture des deux extrémités du tuyau de chemisage (1) avec une garniture d'étanchéité (200), expansion du tuyau de chemisage (1) par introduction d'un fluide sous pression, en particulier de l'air comprimé, dans le tuyau de film intérieur (10) de telle sorte, que le tuyau de revêtement (1) s'élargit radialement à l'intérieur du tuyau de canalisation (100) en séparant le point destiné à la rupture (14) dans la section de liaison (12) et s'applique contre la paroi intérieure du tuyau de canalisation (100), et durcissement de la résine de réaction dans la couche (20) de matériau fibreux par introduction d'une source de rayonnement dans l'espace intérieur du tuyau de film intérieur (10).

11. Procédé de chemisage d'un tuyau d'égout défectueux (100),
**caractérisé par** les étapes de procédé suivantes:
Introduction d'un gaine de chemisage (1) selon la revendication 7 dans le tuyau de canalisation défectueux (100), fermeture des deux extrémités du tuyau de revêtement (1) avec un packer (200), expansion du gaine de chemisage (1) par introduction d'un fluide sous pression, en particulier de l'air comprimé, dans l'autre tuyau de film intérieur (60) de telle sorte, que le gaine de chemisage (1) s'élargit radialement à l'intérieur du tuyau de canalisation (100) en séparant le point destiné à la rupture (14) dans la section de liaison (12) et s'applique contre la paroi intérieure du tuyau de canalisation (100), et durcissement de la résine de réaction dans la couche (20) de matériau fibreux par introduction d'une source de rayonnement dans l'espace intérieur de l'autre tuyau de film intérieur (60).
